(19) Europäisches Patentamt
European Patent Office
Office européen des brevets

(11) **EP 2 640 026 A1**

(12) **EUROPEAN PATENT APPLICATION**

(43) Date of publication:
**18.09.2013 Bulletin 2013/38**

(51) Int Cl.:
**H04L 27/00** *(2006.01)*

(21) Application number: **12159978.1**

(22) Date of filing: **16.03.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **NEC Corporation
Tokyo 108-8001 (JP)**

(72) Inventors:
• **Panaitopol, Dorin
92130 ISSY LES MOULINEAUX (FR)**
• **Bagayoko, Abdoulaye
92140 CLAMART (FR)**

(74) Representative: **Camus, Olivier Jean-Claude et al
Cabinet Camus Lebkiri
87, rue Taitbout
75009 Paris (FR)**

(54) **METHOD FOR ESTIMATING THE FREQUENCY BANDWIDTH OF A COMMUNICATION CHANNEL**

(57)    A method for estimating a bandwidth of a transmitted signal (x(t)) from a received signal (x(t)), the method comprising:

• receiving a signal, the received signal having a known symbol period (Ts) and being filtered by a filter having a roll-off factor (β), the bandwidth can be estimated by a function depending on the roll-off factor (β) and the symbol period (Ts) of the received signal;

• sampling the received signal for generating a sampled signal;

• determining an order (p) of the cyclic autocorrelation function (CAF);

• defining a first and a third predefined value of the cyclic frequency (α1, α2) and second and forth predefined values of the delay (d1, d2),

• calculating a ratio (R), between:
o p order of cyclic autocorrelation function (CAF(α1, d1)) for the first predefined value (α1) and the second predefined value (d1) and;
o p order of cyclic autocorrelation function (CAF(α2, d2)) for the third predefined value (α1) and the forth predefined value (d2);

• using the estimated bandwidth for his own or others transmission purposes.

FIG.6B

## Description

### Technical field

This invention relates to a method using a receiver module and a calculator for estimating the frequency bandwidth of a communication channel used for wireless communications.

### Background technology

The growing number of digital communications systems, communications protocols, wireless networks and continuously increasing demands for throughput imply that frequency bands are becoming increasingly busy.

Conventionally, the current political management of frequency spectrum assigns for a long period of time a licensed frequency band for specific use. However, this spectrum allocation policy led to an apparent exhaustion of the frequency resource.

One solution consists in using an opportunistic access to frequency spectrum. Two different kinds of spectrum users are defined. Firstly, the legitimate users, also being called "primary licensed users", and secondary users which are allowed to use an allocated part of the spectrum only if the primary users are not using the band or only if the generated interference is acceptable.

Therefore, the secondary users are allowed to use licensed frequency bands only under specific conditions. For instance, a part of the spectrum can be allocated to a secondary user if primary users are not present or if a certain level of interference is required.

In order to integrate these considerations in a context of re-using the frequency spectrum, different devices and products such as smartphones, modems, and any kind of wireless communication systems have to integrate specific policies.

Otherwise, there are some devices that can adapt their allocated frequency spectrum by several active operations such as the pre- configurations.

The cognitive radio device has been therefore defined as a terminal which is aware of its electro-magnetic environment. A cognitive radio device is able to adapt its transmissions accordingly to a specific transmission policy.

A cognitive radio is "a device that can acquire, learn and act" in the benefit of the network.

The receiver of a cognitive radio device may therefore have embedded detection capabilities or functionalities.

One inconvenience of current solutions is that, for real-time applications such as transmission system applications, it is difficult to estimate precisely the bandwidth occupancy of a received signal.

A cognitive radio device may sense a specific frequency band in order to estimate its occupancy and takes decision whether the secondary system transmits or not. Some devices use different information acquired during the acquisition phase of received signals in order to estimate the bandwidth communication channel, but they are using approximate and inefficient methods.

Interference and noise make bandwidth measurements very complex. In addition, the primary signals to be detected in a reception module are subject to different environment changes such as shadowing, fading or path loss. Therefore, primary signals are sometimes very difficult to detect.

One drawback of current methods is that they do not lead to a satisfactory estimation of the unoccupied frequency channels and/or to a satisfactory matched filtering adaptation agility. Particular, one inconvenience of current methods is that it is difficult to precisely estimate their bandwidth either for primary or for secondary users.

Moreover, a receiver which is able to estimate the frequency bandwidth of the received signal does not know each time the shaping function of the transmitter, and therefore nor of the received signal- or its characteristics. The ignorance of any characteristic of the received signal can make very difficult the analysis of the bandwidth.

Moreover, one specific need comes from the uses of digital transmissions and particularly transmitters including Nyquist filters which are widely used by the telecommunication systems.

### Summary

One object of the invention is to overcome at least some of the inconveniences of the state of the art.

It is an object of the invention to provide a method for estimating a bandwidth BW for a given digital signal x (n), the digital signal being a sampled signal by a sampling period Te from a given transmitted signal x(t) being filtered by a filter having a roll-off factor $\beta$, the digital signal having a known symbol period Ts.

The method of the invention comprises:

- determining an order p of the cyclic autocorrelation function CAF of the digital signal s(n), the cyclic autocorrelation function CAF being a function of a delay d and a cyclic frequency $\alpha$, noted CAF($\alpha$, d);

- defining a first predefined value of the cyclic frequency ($\alpha1$) and second predefined values of the delay d1,
- estimating at least one first value of a main function depending of the p order of the cyclic autocorrelation function for the first and the second predefined values using a calculator ;
- comparing the estimated first value of the main function with at least one set of predefined values $\{V_i\}_\beta$ from a knowledge base KB stored in a memory, each predefined value of the set of predefined values $\{V_i\}_\beta$ being associated to a unique roll-off factor $\beta$.
- estimating a bandwidth BW using a modelling function of the bandwidth depending on the roll-off factor $\beta$ and the symbol period Ts of the received signal.

In one embodiment, the main function is the p order of the cyclic autocorrelation function $CAF_p$ ($\alpha1$, d1) for the first predefined value ($\alpha1$) and the second predefined value d1 and the predefined values of the knowledge base KB are predefined CAF values $\{CAF_{KB}\}_{\beta,Te}$, each $CAF_{KB}$ of the set of predefined CAF being associated to a unique sampling period Te.

In a second embodiment, the method for estimating a bandwidth BW the method comprises :

- defining a third predefined value of the cyclic frequency ($\alpha2$) and forth predefined values of the delay (d2).
  In this embodiment, the main function is the an estimating ratio ($R_E$) between:
- p order of cyclic autocorrelation function ($CAFp(\alpha1, d1)$) for the first predefined value ($\alpha1$) and the second predefined value (d1) and;
- p order of cyclic autocorrelation function ($CAFp(\alpha2, d2)$) for the third predefined value ($\alpha2$) and the forth predefined value (d2).
  and the predefined values of the knowledge base (KB) are predefined ratio $\{R_{KB}\}_\beta$ from a knowledge base (KB).

According to the second embodiment, the first predefined value $\alpha1$ and the third predefined value $\alpha2$ can be the same value in a preferred configuration.

According to the present invention, one configuration is particularly advantageous with the definition of the first, second, third and the forth predefined values as follow. The absolute value of the first and the third predefined values of the cyclic frequency are equal to the inverse of the known symbol period Ts. The second predefined value of the delay is equal or approximately equal zero. The absolute value of the third predefined value of the delay is equal to the symbol period.

According to some preferred embodiments of the invention the order is an even order. In preferred embodiment, it is a forth order or a second order. That results in improved accuracy of estimating the estimated ratio $R_E$.

Advantageously, the method comprising finding a variable that is minimizing a first function $F_1$ defined by the mean square difference between the main function CAFp or the estimated ratio $R_E$ and each value of the set of predefined values of a knowledge base.

Advantageously, the method comprising finding a variable that is minimizing a second function $F_2$ defined by the mean square difference between:

- imaginary part of the main function : Im(CAFp) or the estimated ratio Im($R_E$);
- imaginary part of the set of predefined values of a knowledge base. Im($R_{KB}$) when ratio is used for instance.

Advantageously, the method comprising finding a variable that is minimizing a third function $F_3$ defined the mean square difference between:

- real part of the main function : Re(CAFp) or estimated ratio Re($R_E$);
- real part of the set of predefined values of a knowledge base. Re($R_{KB}$) when ratio is used for instance.

Advantageously, the method comprising finding a variable that is minimizing a forth function $F_4$ defined by the sum of the second and the third functions.

In addition, the method of the invention may comprise finding a variable that is minimizing a combination of functions $F_1$, $F_2$, $F_3$, $F_4$.

The method comprising calculating the roll-off factor by comparing estimated ratio with the set of predefined values (predefined ratio or predefined CAF values), the bandwidth being deduced by the modelling function defined by the relationship: BW = (1 + $\beta$) / Ts.

In one embodiment of the invention, the method for estimating a bandwidth BW comprises configuring a secondary transmission. A second filter may be used for transmission in order to not overlap with the estimated frequency band. In this way, the cognitive device might exploit for its own transmissions or any other transmissions the unoccupied frequency band which is located near the estimated occupied band.

Furthermore, one other object of the invention concerns a detection device used for estimating a bandwidth comprising a receiving module and an antenna configured for receiving and sampling wireless signals, the detection device having furthermore a calculator operating on sampled signal, the detection device allowing the achievement of the method of the invention. The detection device is able to generate a value corresponding to bandwidth channel frequency of the received signal.

The object of the invention also concerns an adaptive and/or reconfigurable filter having an agile reconfigurable and/or adaptive digital filter configured for matching its shaping function with the estimated shaping function.

The term "reconfigurable filter" is usually employed in a hardware context, while "adaptive filter" is usually employed in a software or algorithm context. In the following description the term "reconfigurable" or "adaptive" filter is used to take into account both contexts.

The object of the invention also concerns a radio system comprising such an reconfigurable and/or adaptive filter. The purpose of this filter is therefore to configure secondary user receiver in order to match with the received primary waveform, which allows better analysis of the primary signal.

The object of the invention also concerns any system comprising a reconfigurable or/and adaptive filter. The invention concerns any system that needs to accurately estimate the bandwidth of a given transmission.

The invention concerns any system that uses the bandwidth estimation of other transmitting devices for its own transmission purpose.

### Brief description of the drawings

These and other aspects of the invention will be apparent from and elucidated with reference to the embodiments described hereafter with reference being made to the drawings in which:

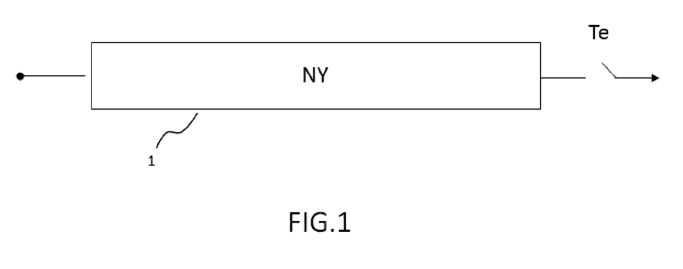

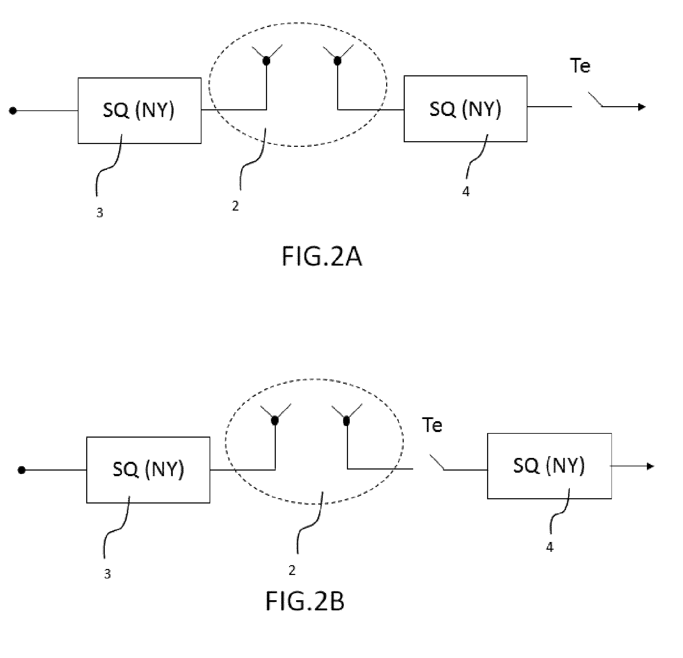

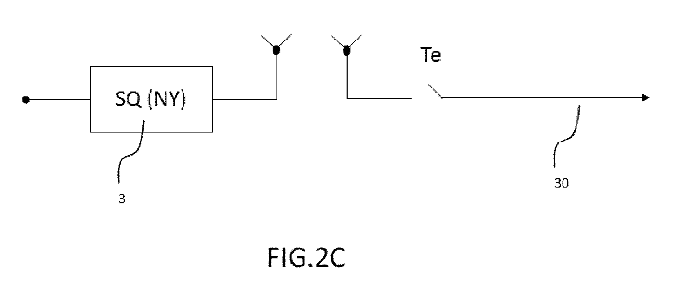

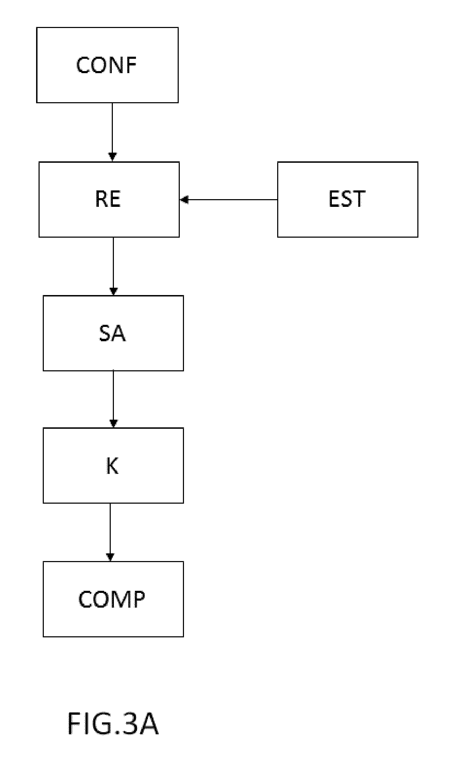

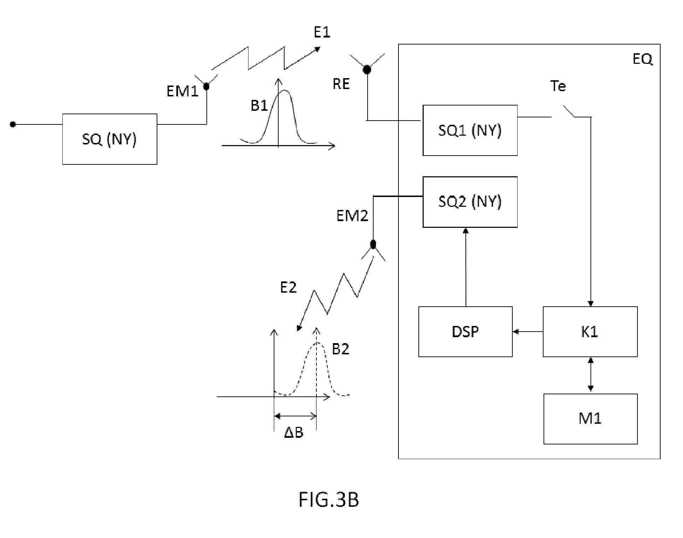

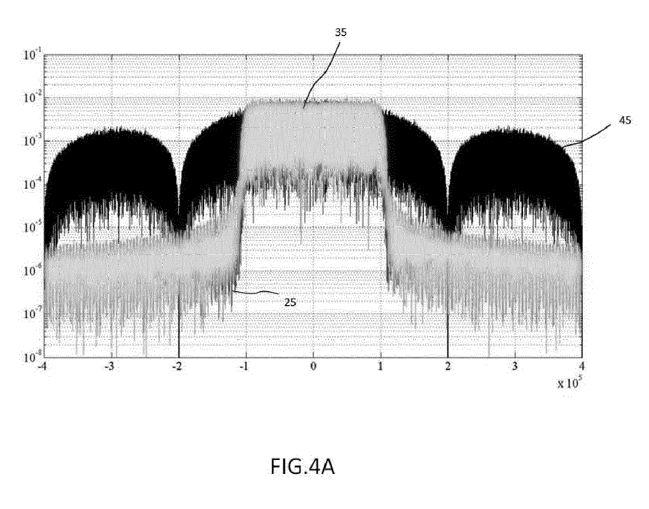

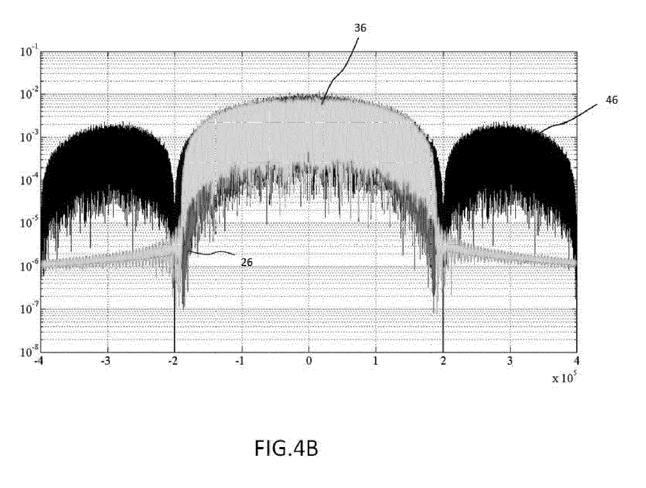

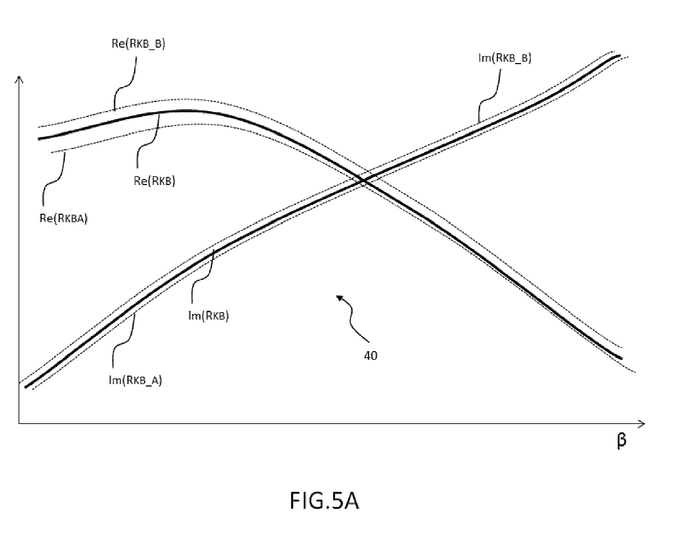

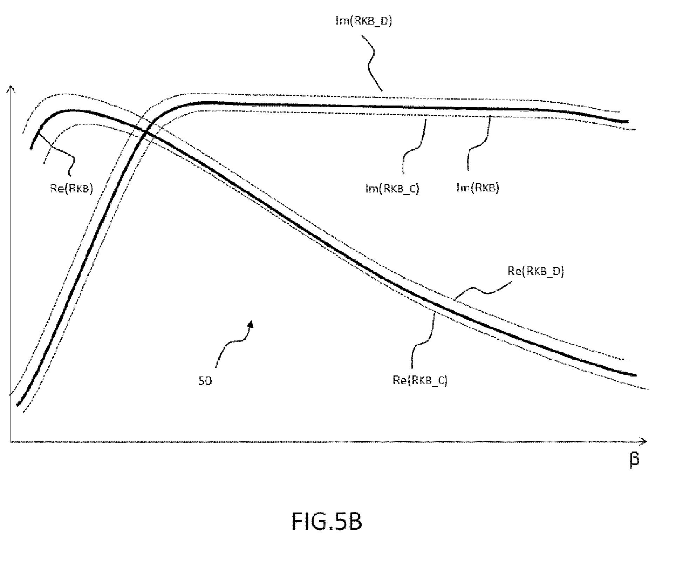

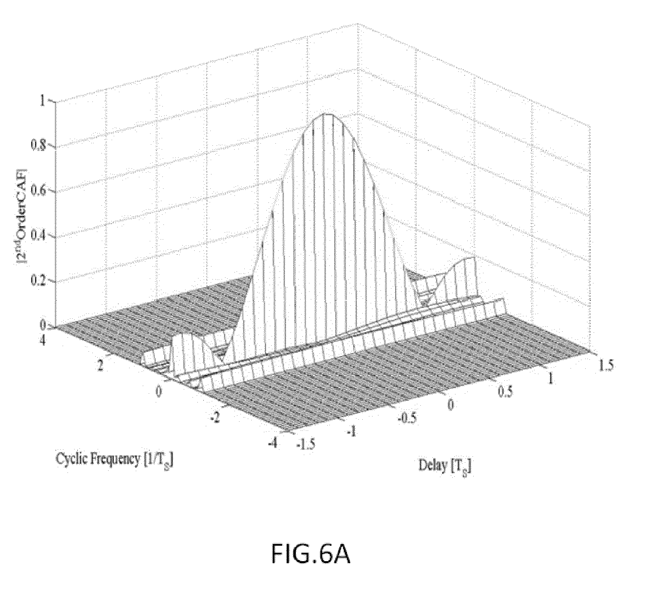

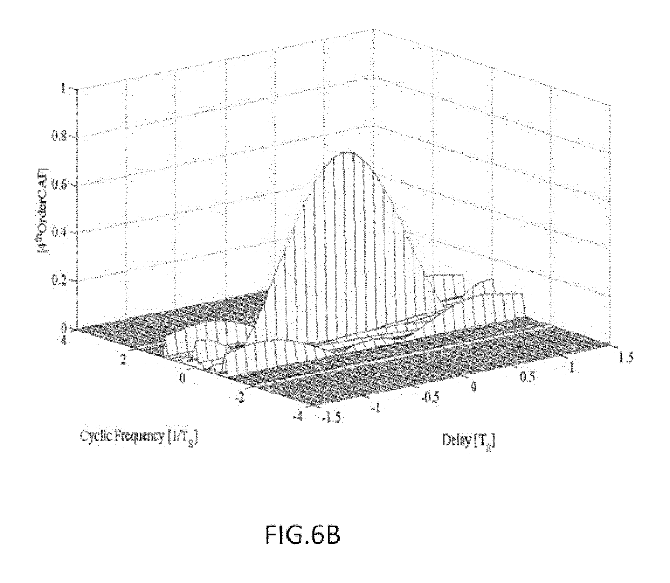

■ figure 1: schematically illustrates a Nyquist filter of a receiver with a sampling component of the state of the art;
■ figure 2A: schematically illustrates a channel communication between a transmitter and a receiver having a half-Nyquist filter each;
■ figure 2B: schematically illustrates an alternative in which a sampling module is arranged upstream from the half-Nyquist filter;
■ figure 2C: schematically illustrates a receiver having a sampling module without any Nyquist filter;
■ figure 3A: a functional diagram of one embodiment of the method of the invention for estimating a bandwidth of a transmitted signal;
■ figure 3B: communication capability of a radio system of the invention ;
■ figures 4A, 4B: represent digital communication modulated with rectangular, square root cosine and square root raised cosine shaping functions ;
■ figures 5A, 5B: illustrate a knowledge base as a function of the roll-off-factor of two different filters of the channel transmission ;
■ figures 6A, 6B: illustrate CAF2 and CAF4 functions used in different embodiments of the invention.

### Detailed description

In the present description, the roll-off factor, noted $\beta$, is a term commonly used to describe the steepness of a shaping function used by a transmitter and/or a receiver for different purposes such as filtering techniques and/or matched filtering techniques respectively.

In the present description, "symbol period" is in digital communications the inverse of symbol rate. The symbol rate is also known as baud or modulation rate, and is the number of symbol changes made to the transmission medium per second.

In the following description, a reception device is interchangeably called receiver.

In the following description, a detection device is interchangeably called detector.

Nyquist filter is used by any digital communication systems due to its ability to cancel Inter Symbol Interference, known as "ISI", and to decrease adjacent channels interference by reducing spectral density function side lobes.

The description of a transmission system using Nyquist filtering is given in Figure 1. A digital modulation transmission system is usually using a distributed Nyquist filter solution.

The Nyquist filter, also noted NY, might be distributed between the transmitter Tx and the receiver Rx. In the following, the notation SQ(NY) can be used to describe the half-Nyquist filter. A system composed of two half-Nyquist filters will be equivalent to a complete Nyquist filter. In the transmitter, SQ(NY) is used as a shaping function while in the receiver SQ(NY) is used as a matched filter.

Another alternative would be a transmission system that uses NY in a transmitter TX. In this embodiment, the transmitter uses a NY filter and not necessary SQ(NY).

The receiver of the invention comprises at least an antenna for receiving a signal noted s(t), and a sampling module which is able to sample the received signal at a sampling period noted Te. The sampled signal is noted s(n). The sampled signal s(n) is analyzed by a calculator of the receiver. The sampling period Te can be (but not compulsory) chosen equal to symbol period Ts divided by $n$, where $n$ is an positive integer. In an alternative embodiment, the sampling period Te is chosen equal to the symbol period Ts of the received signal.

Furthermore, the receiver comprises a memory chip in order to store or save temporary data for calculation and reference data needs for achieving the method of the invention.

In the context of the invention concerning signal detection and /or bandwidth estimation, the transmitter is the transmitter of the primary user while the receiver is the receiver of the secondary user. The invention concerns the receiver. In the context of this invention, the receiver may also have implemented detection functions. Detection functions allow detecting primary user activity and providing enhanced capabilities such as bandwidth estimation. The receiver comprises a detection devices allowing achieving the steps of the method of the invention.

The detection device of the invention can be implemented in different ways depending on the configuration chosen. A first configuration is related to a detection mode in which the detection device knows the filter of the transmitter. A second configuration is related to a detection mode in which the detection device does not know the filter of the transmitter.

In the first implementation, the detection device knows the digital or analogue shaping filter 3, as described in Figures 2A and 2B. In both implementation of Figures 2A and 2B, a detection chain using a matched filtering is presented. This detection device can be applied either for analogue and digital implementations. The wireless transmission channel 2 is defined between a first antenna from a primary user having a terminal comprising a half-Nyquist filter 3 and a second antenna from a secondary user having a terminal comprising a half-Nyquist filter 4.

The Figure 2A illustrates an implementation in which the half-Nyquist filter 4 is arranged in the detection chain upstream a sampling module with a sampling period Te.

The Figure 2B illustrates an implementation in which the half-Nyquist filter 4 is arranged in the detection chain downstream a sampling module.

In the second implementation, the detection device 30 does not know the shaping filter 3 and does not perform matched filter at the reception as shown in figure 3C. In this implementation, the detection device, i.e. the secondary user receiver, does not know the shaping filter being used by the primary user transmitter.

The detection device of the invention is able to estimate the bandwidth of the transmitter, which is given by the choice of the shaping function. One advantage of this estimation is to perform a matched filtering on the received signal.

Different shaping functions can be used by a transmitter. For instance two filters are mainly used in digital modulation systems in telecommunication domain.

Firstly a possible implementation of Nyquist filter is the raised cosine filter, usually noted RC.

The impulse response of such a filter is given by the following relationship in the time domain:

$$h(t) = \text{sinc}\left(\frac{t}{T_s}\right) \frac{\cos\left(\frac{\pi\beta t}{T_s}\right)}{1 - \frac{4\beta^2 t^2}{T_s^2}}$$

where "h(t)" is the time domain response of the filter, "Ts" the symbol period, "$\beta$" a parameter called roll-off factor.

The time and frequency domain representations for different roll-off factor values $\beta$ of a RC filter are available and described in the book: "Digital Communications", John G. Proakis.

In signal processing, a root- raised- cosine filter (RRC) , sometimes known as square- root- raised- cosine filter (SRRC) , is frequently used as the transmit and receive filter in a digital communication system to perform matched filtering. The combined response of two such filters is that of the raised- cosine filter.

The impulse response of such RRC filter in time domain is given by the following relationship:

$$h(t) = \begin{cases} 1 - \beta + 4\dfrac{\beta}{\pi}, & t = 0 \\[2mm] \dfrac{\beta}{\sqrt{2}}\left[\left(1 + \dfrac{2}{\pi}\right)\sin\left(\dfrac{\pi}{4\beta}\right) + \left(1 - \dfrac{2}{\pi}\right)\cos\left(\dfrac{\pi}{4\beta}\right)\right], & t = \pm\dfrac{T_s}{4\beta} \\[2mm] \dfrac{\sin\left[\pi\dfrac{t}{T_s}(1-\beta)\right] + 4\beta\dfrac{t}{T_s}\cos\left[\pi\dfrac{t}{T_s}(1+\beta)\right]}{\pi\dfrac{t}{T_s}\left[1 - \left(4\beta\dfrac{t}{T_s}\right)^2\right]}, \end{cases}$$

The time domain representations for different β of the RRC filter is available and described in the book: "Digital Communications", John G. Proakis.

In the second implementation, the detection device of the invention does not know the bandwidth, noted BW, of a transmitted signal from the primary user.

In the detection device of the invention, a symbol period Ts of the transmitted signal is known. The symbol period Ts is stored in a memory and can be applied for the following calculation of the method of the invention as described below. In that case, Ts can be extracted from a database.

In another implementation of the invention, the detection device comprises a component allowing estimation of the symbol period Ts. After estimation of the symbol period Ts, this component can transmit the estimated value Ts to the calculator of the detection device in order to apply in the method of the invention. Some estimation methods of Ts are mentioned below. The figure 3A shows an EST block allowing an estimation of the Ts value in order to apply this value in the method of the invention.

The detection device of the invention is able to accurately estimate the bandwidth BW of the primary user by the method described as follow.

The advantage of estimating the bandwidth of the primary user transmissions allows avoiding interference between a system of a secondary user and a system of a primary user. When communication capability is available on a system of a secondary user, it allows improving the efficiency of the communication of a secondary user by using all unused primary user spectrum.

The Root Raised Cosine RRC filters are used to implement Nyquist filtering. The bandwidth BW is a function of the symbol period Ts and β.

β previously known as the roll-off factor, can be considered also as the root raised cosine filter coefficient or the raised cosine filter coefficient.

The bandwidth of a digital transmission for a predefined roll-off factor $\beta_1$ and for a given symbol period $Ts_1$ can be represented in frequency domain by a spectral envelope, represented in figures 4A, 4B described above, with different characteristics and different advantages.

Digital transmissions using Nyquist filtering allow limiting the bandwidth of the system and to reduce Inter Symbol Interference ISI.

One benefice of Nyquist filtering is that the spectral envelope of the bandwidth of the transmitted signal can be easily modeled as a function depending on the roll-off factor β and the symbol period Ts.

The system bandwidth is proportional to its symbol period Ts and its roll-off factor β, according to the following equation: BW = (1+ β) / Ts which constitutes a modeling function of the filter.

The detection device of the invention can be configured so as to implement the method of the invention which is able to determinate β with a known value of Ts. Therefore, the detection device having a calculated value of β can accurately determine the bandwidth BW using the modeling function.

The method of the invention applies to any digital systems using Nyquist filters employing roll-off factors β. The method of the invention presupposed the knowledge of the symbol period Ts as a known parameter in the method described as follow.

The method for estimating a bandwidth BW for a given transmitted signal s(t) can be achieved by a detection device described as above.

Figure 3A illustrates a functional flow chart diagram in which different steps allow achieving the method of the invention. A first configuration step, noted CONF, can be realized by a user. The user of a detection device can configure and set parameters as the different predefined values (α1, α2, d1, d2, p order) in order to achieve a goal depending on predefined performance characteristics such as accuracy, rapidity, computing power and structural characteristics under specific component choices. The configuration step could result from a compromise between different performance characteristics or/and component choices.

The estimation of Ts can be applied during the receiving of a signal by another method as described above. The figure 3A shows a EST block when Ts is estimated by such a method.

A second step, noted RE, allows the detection device to receive a signal from a transmitter. A third step, noted SA, allows sampling the received signal to a digital signal. A forth step, noted K, describes calculations from different functions as for instance the ratio of even order of cyclic autocorrelation functions.

Furthermore, the method comprises a step, noted COMP, that allows comparing some values of calculated ratio as above and predefined values of known ratios depending of roll-off factor $\beta$ of a filter that permits to deduce bandwidth estimation.

The bandwidth BW can be estimated by a first function depending on the roll-off factor $\beta$ and the symbol period Ts of the received signal by the following modelling function: BW = $(1+\beta)$ / Ts. So estimating the roll-off factor $\beta$, knowing the symbol period, is equivalent estimating the bandwidth BW.

Initially, the method of the invention permits to estimate the roll-off factor $\beta$ of the channel communication filtering. The bandwidth can be deducted easily by the above relationship.

Figure 3B represents an embodiment of a radio system EQ comprising a receiver of the invention. The receiver comprises detection functions as described above.

A first reception channel of the receiver comprises a first antenna RE, a first half-Nyquist filter SQ1 (NY), a sampling module with a sampling period Te, a calculator K1 and a memory M1. The first reception channel allows achieving the method of the invention in order to estimate the frequency bandwidth B1 of a channel communication E1 from a primary user which comprises a half-Nyquist filter SQ(NY) and an antenna EM1.

A first emission channel of the radio system EQ comprises a digital signal processor DSP, a half-Nyquist filter SQ2(NY) and a second antenna EM2. The calculator allows generating a set point to the DSP in order to match the second half-Nyquist filter SQ2(NY) for the emission of a second signal E2 in a second frequency bandwidth B2.

The figure 3B represents communication capability of a radio system of the invention which is able to scan a frequency bandwidth and to detect gaps in the bandwidth in order to match a second frequency bandwidth for emissions. On figure 3B, the transmitted signal EM2 is emitted with a frequency shift, noted $\Delta$B, with respect of the received signal.

In one embodiment the filters SQ1 (NY) and SQ2(NY) can be the same filters.

The radio system and the method of the invention allow avoiding overlapping between the first frequency bandwidth B1 and the second frequency bandwidth B2.

The purpose of these filters is therefore to configure secondary user receiver in order to match with the received primary waveform, which allows better analysis of the primary signal E1.

The radio system of the invention allows realizing a bandwidth estimation which is implemented on a secondary user. That means that the secondary user can use bandwidth estimation in order to communicate.

The signal transmitted from EM1, noted E1, usually has a first frequency carrier fc1. The radio system EQ comprises also frequency carrier estimation but these functionalities are not represented on figure 3B. The radio system EQ also comprises a transmitter EM2 transmitting the signal E2 via a second frequency carrier fc2.

When retransmitting the signal E2, EM2 has to use a carrier frequency fc2 different from fc. For example, if transmitting just near the previously estimated bandwidth, fc2 has to be equal to fc$\pm$($\Delta$B/2+$\Delta$B2/2) where $\Delta$B is the bandwidth of the estimated signal and $\Delta$B2 is the frequency bandwidth of new transmitted signal E2.

A DSP can be used in order to achieve this functionality.

Other functionalities are not represented in figure 3B as :

■ Amplification chain, as for instance Low Noise Amplifier, or ;
■ Mixers in order to bring the signal into baseband channel or ;
■ Filters, as for instance Low Pass Filter.

In the embodiment of figure 3B, a SQ1 (NY) filter is used but it is optional. SQ2(NY) could be equal or different from SQ1 (NY) in others embodiments.

A DSP can be used in order to achieve this functionality.

The invention concerns a device which is using the estimation capabilities for his own communication and or transmission purposes.

The radio system of the invention allows a secondary user to acquire and therefore to detect a signal. Moreover, it allows a secondary user to learn and therefore to estimate a frequency bandwidth. Furthermore, it also allows a secondary user to act and therefore to transmit to other secondary users if the primary licensed band is underused or used inefficiently.

Figure 4A represents a first example of digital transmissions 25, 35, 45 using $\beta$=0.1 and figure 4B represents a second example of digital transmissions 26, 36, 46 using $\beta$=0.9. Both figures represent a signal using the same symbol period Ts.

In figure 4A, a first signal 45, respectively 46 in figure 4B, is modulated with a QPSK modulation in which Ts = 1/ (200*10³) sec with a rectangular shaping function.

In figure 4A, a second signal 35, respectively 36 in figure 4B, is modulated with a QPSK modulation in which Ts = 1/ (200*10³) sec with a square root shaping function.

In figure 4A, a third signal 25, respectively 26 in figure 4B, is modulated with a QPSK modulation in which Ts = 1/ (200*10³) sec with a square root raised shaping function.

Figure 4A shows that the bandwidth from signal 35 and 25 are substantially equal. Figure 4B shows that the bandwidth from signal 36 and 26 are substantially equal.

The bandwidth of the signals 35, 36 is given by both symbol period Ts and roll-off factor β.

The numerical calculus in figure 4A allows calculating a bandwidth approximately equal to 200kHz and approximately equal to 400kHz in figure 4B.

The method comprises receiving a signal x(t) using an antenna configured or chosen for a large spectrum frequency bandwidth. x(t) is the signal received at the receiver side, which is composed of useful signal s(t) and noise N. After x(t) is being sampled at sampling time Te, one obtains x(n).

We consider in the following description a useful signal s(t) received at the antenna of a detection device of the invention. It is equivalent in the method of the invention to consider the noise or not in the received signal. In others embodiments the detection device comprises multiple antennas.

The signal received has a symbol period (Ts), being known by the detection device. The signal is filtered by a filter having a roll-off factor β.

The method comprises sampling the received signal s(t) with a predefined sampling period Te for generating a sampled signal s(n).

The method comprises determining an even order, called 2p, of the cyclic autocorrelation function, noted CAF, of the sampled signal s(n).

In another embodiment, the method of the invention allows determining an odd order 2p-1 of the cyclic autocorrelation function.

In the following description, the method of the invention describes an embodiment with an even order of the cyclic autocorrelation function. For p = 1, when 2p cyclic autocorrelation function it is used, the second order of the cyclic autocorrelation function is noted CAF2. For p = 2, the forth order of the cyclic autocorrelation function is noted CAF4.

The autocorrelation function, noted $R_{ss}(t, \tau)$ of a signal s(t) can be represented by Fourier series expansion, which is expressed as:

$$R_{ss}(t,\tau) = \sum_{\alpha \in \psi} R_{ss}^{\alpha}(\tau) \exp(j2\pi\alpha t)$$

where α is a cyclic frequency.

$R_{ss}^{\alpha}(\tau)$ is the Fourier coefficient, also called Cyclic Autocorrelation Function and noted as above CAF.

$R_{ss}^{\alpha}(\tau)$ is a function which dependents on both cyclic frequency α and delay τ.

The second order of the cyclic autocorrelation function CAF2, where p=1, can be written as:

$$R_{ss}^{\alpha}(\tau) = \lim_{T\to\infty} \frac{1}{T} \int_{-\frac{T}{2}}^{\frac{T}{2}} s(t)s^{*}(t-\tau)\exp(-j2\pi\alpha t)dt = \lim_{T\to\infty} \frac{1}{T} \int_{-\frac{T}{2}}^{\frac{T}{2}} s^{*}(t)s(t+\tau)\exp(-j2\pi\alpha t)dt$$

This function is also named Cyclic Autocorrelation Function of order 2.

In its time-discrete form, CAF2 can be also written as

$$R_{ss}^{\alpha}(d) = \frac{1}{N}\sum_{n=0}^{N-1} s^*(n)s(n+d)\exp(-j2\pi\alpha n T_e)$$

,

where "d" represents the delay time normalized by the sampling period Te. In the following description the delay will be noted "d".

The method of the invention comprises determining an even order, called 2p, of the cyclic autocorrelation function of the sampled signal s(n). One preferred embodiment comprises determining the 4th order of the cyclic auto-correlation function.

Considering the 4th order of this function permits to provide a better assessment of the channel communication bandwidth regarding the cyclostationary statistical tests that can be exploited for estimating the roll-off factor β in a further step of the method described as follow.

The 4th order cyclic autocorrelation function CAF4, considering only one non-zero delay d, and two conjugates can be defined such as:

$$R_{ssss}^{\alpha}(d) = \frac{1}{N}\sum_{n=0}^{N-1} s^*(n)s^*(n)s(n)s(n+d)\exp(-j2\pi\alpha n T_e)$$

The above function depends on both cyclic frequency $\alpha$ and delay d. For QPSK, the cyclic frequency value is $\pm 1/Ts$.

For a CAF function, any combination including different number of conjugates s* can be applied in the method of the invention :

- the number of conjugates of CAF4 can be 1, 2, 3, 4 or none;
- the number of conjugates of CAF 2 can be 1, 2 or none.

For a CAF function, any combination including different number of delay d and different values of delays (d1, d2, etc) can be applied in the method of the invention :

- the number of delays in CAF4 function can be 1, 2, 3, 4 or none ;
- the number of delays in CAF2 function can be 1, 2 or none ;

Figure 6A represents a CAF2 function for a QPSK modulation using β=0.22 and a root raised cosine filter SQ(NY).

Figure 6B represents a CAF4 function for a QPSK modulation using β=0.22 and a root raised cosine filter SQ(NY).

In others embodiments, CAF4 function can be defined by considering three delays. In others embodiments, CAF4 function can be defined by considering two delays. In the embodiment described as follow, the method of the invention used only one delay.

In others embodiments, CAF4 function can be defined by considering several conjugates.

The method of the invention comprises defining a first predefined value of the cyclic frequency $\alpha$1 and second and third predefined values of the delay d1, d2 which will be applied for specific computation of the CAF4.

When using only one delay, CAF4 can be written as CAF4($\alpha$, d), a function which depends on the cyclic frequency $\alpha$ parameter and delay d parameter.

The configuration step of the invention can allow a user to define a first predefined value of the cyclic frequency $\alpha$1 and second and third predefined values of the delay d1, d2. The configuration step permits also to parameter the even order of the cyclic autocorrelation function that will be used in the method of the invention. There is a configuration by default in the device of the invention.

In order to estimate the bandwidth BW of the channel communication, the method of the invention uses a specific value of the symbol period Ts stored in a database of a memory of the detection device. In another embodiment of the invention, the symbol period can be estimated by another method such as a Kurtosis minimization process (e.g., the Kurtosis is minimized when Te=Ts), or a differential Ts recovery process or cyclostationary method.

These methods can be complementary implemented with the method for estimating the roll-off factor and/or the bandwidth of a channel communication of the invention.

The method comprises calculating a specific function using the calculator of the detection device. The specific function is defined by a ratio, noted $R_E$, between the 2p order of cyclic autocorrelation function 2p- CAF ($\alpha$1, d1) for a first predefined value $\alpha$1 of the cyclic frequency $\alpha$ and a second predefined value d1 of the delay d and the 2p order of cyclic autocorrelation function 2p- CAF ($\alpha$1, d2) for the third predefined value $\alpha$2 of the cyclic frequency $\alpha$ and a forth predefined value d2 of the delay d.

One preferred embodiment is to consider the first $\alpha$1 and the third $\alpha$2 predefined value equal, $\alpha$1 = $\alpha$2.

The ratio $R_E$ is an estimated ratio calculated for the 2p order of the cyclic autocorrelation function.

The ratio $R_E$ can be calculated for the 4th order of the cyclic autocorrelation function. $R_E$ can be written as the ratio defined by the following relationship:

$$R_E = \frac{CAF4(\alpha_1, d_1)}{CAF4(\alpha_1, d_2)}$$

and is dependent on $\alpha$1, d1 and d2 when $\alpha$1 is equal to $\alpha$2.

Advantageously, the predefined value $\alpha$1 of the cyclic frequency can be chosen equal or significantly equal to $\alpha$1=1/Ts.

In another embodiment, the cyclic frequency can be chosen as the inverse of $\alpha$1 = $\alpha$2= -1/Ts.

It actually can be any possible combination 1/Ts and -1/Ts :

- $\alpha$1=1/Ts; $\alpha$2=1/Ts
- $\alpha$1=-1/Ts; $\alpha$2=1/Ts
- $\alpha$1=1/Ts; $\alpha$2=-1/Ts
- $\alpha$1=-1/Ts; $\alpha$2=-1/Ts

In those conditions, two favorable values of the delay d1 and d2 are multiple of Ts or zero:

d1 = 0; where d1 is 0 x Ts,
It can be also noted: d1=0Ts = 0, for the further notation.
d2 = +Ts or - Ts.

The specific function where these values are chosen can be noted $R_4$ and written as:

$$R_4 = \frac{CAF4(1/Ts, 0Ts)}{CAF4(1/Ts, Ts)}$$

The estimated cyclostationary autocorrelation function of order 4 noted CAF4 with d1= 0Ts and $\alpha$1=1/Ts can be written as follows:

$$CAF4(1/Ts, 0Ts) = \sum_{n=1}^{N} x^*(n) x^*(n) x(n) x(n+0Ts) e^{-j2\pi n \frac{1}{Ts} Te} \cong F(\beta, Te)$$

However, as described by the above equation, CAF4 (1/Ts, 0Ts) is a function F of both roll- off factor $\beta$ and sampling period Te.

As alternative embodiments, one can directly use CAF2 and CAF4, but as previously explained, F depends of at least 2 parameters :$\beta$ and Te. As showed next, this dependence can be minimized to one parameter $\beta$ when introducing the ratio.

Also, it has been noticed that CAF2 can be used in several situations. However, CAF4 has better properties when it is used for bandwidth estimation purposes.

Another alternative embodiment would be to use instead of CAF which is a function of delay and cyclic frequency, the Cyclo Spectrum which is a function of frequency and cyclic frequency.

On advantage of the method of the invention is that the ratio $R_4$ can be written as follows:

$$R_4 = \frac{CAF4(1/Ts,0Ts)}{CAF4(1/Ts,Ts)} = \frac{\sum_{n=1}^{N} x^*(n)x^*(n)x(n)x(n)e^{-j2\pi n\frac{1}{Ts}Te}}{\sum_{n=1}^{N} x^*(n)x^*(n)x(n)x(n+Ts)e^{-j2\pi n\frac{1}{Ts}Te}} \cong F(\beta)$$

The specific function defined as a ratio $R_4$ of CAF4 with delay 0Ts and CAF4 with delay +Ts for the cyclic frequency $\alpha 1 = 1/Ts$ is a function dependent only on the roll-off factor $\beta$.

In another embodiment, $R_4$ could have been calculated with the ratio of CAF4 with delay 0Ts and CAF4 with delay -Ts.

One advantage, considering this ratio $R_4$, is that this ratio is a function depending on roll-off factor $\beta$ only. This has the advantage of simplifying the algorithm.

As alternative embodiments of the method of the invention, the ratio $R_E$ can be chosen as a ratio of CAF2, noted $R_2$ for specific values of cyclic frequency and delay. Keeping the previous predefined values, the ratio $R_2$ can be written as follows:

$$R_2 = \frac{CAF2(1/Ts,0Ts)}{CAF2(1/Ts,Ts)}$$

In another embodiment, several measurements of the ratio can be achieved with different time periods in order to reduce or eliminate the noise influence in measurements. The mean of the ratio, $R_2$ or $R_4$, can be calculated over multiple sensing periods.

In another embodiment, the ratio $R_E$ of Generalized Likelihood Ratio Test, noted GLRT, for predefined values of cyclic frequency $\alpha 1$ and delay d1 and d2 can be considered, for instance in specific values 0 and Ts. The GLRT relates to the test statistic of second order $N \cdot \underline{r}_{xx}^{\alpha}(\tau) \cdot \left(\sum_{r}(\alpha)\right)^{-1} \cdot \underline{r}_{xx}^{\alpha}(\tau)^T$, where

$\underline{r}_{xx}^{\alpha}(\tau) = \left[\mathrm{Re}\left(R_{xx}^{\alpha}(\tau)\right), \mathrm{Im}\left(R_{xx}^{\alpha}(\tau)\right)\right]$ and the covariance matrix $\Sigma_r\alpha$ is computed.

Similarly, the test statistic of 4th order can be further used.

The method uses a knowledge base noted KB, stored in a memory of the detection device of the invention.

The method comprises comparing the calculated value of the ratio $R_E$ ($R_4$ when calculated with the specific predefined values defined as above) with a set of predefined ratio values stored, noted ($\{R_{KB}\}_\beta$), in a knowledge base KB. The set of predefined ratio values depends on roll-off factor $\beta$ values. The set of predefined ratio values ($\{R_{KB}\}_\beta$) can be stored in a memory as a chart defined by a function depending on the roll-off factor $\beta$ values. Each set of predefined ratio values ($\{R_{KB}\}_\beta$) depending of roll-off factor is stored for a specific signal filter, as a root raised cosine filter, a raised cosine filter, or others filters.

In a alternative embodiment the method comprises comparing the calculated value of $CAF_E$ ($CAF4_E$ when calculated using CAF of 4th order) with a set of predefined CAF values stored, noted ($\{CAF4_{KB}\}_{\beta,Te}$), in a knowledge base KB. The set of predefined CAF values depends on roll-off factor $\beta$ and Te values. The set of predefined CAF values ($\{CAF4_{KB}\}_{\beta,Te}$) can be stored in a memory as a chart defined by a function depending on the roll-off factor $\beta$ and Te values. For each Te, each set of predefined CAF values ($\{CAF4_{KB}\}_{\beta,Te}$) depending of roll-off factor is stored for a specific signal filter, as a root raised cosine filter, a raised cosine filter, or others filters.

Another alternative embodiment is to use CAF2 instead of CAF4.

The comparison step of the method of the invention is defined in the flow chart diagram as COMP.

In that way, the method of the invention allows comparing an estimated real-time value $R_{KB}$ with a set of predefined ratio values defined by a graph stored in the memory of the detection device.

In one embodiment, few values of a graph are stored in the memory, the rest of them can be interpolated through an averaging method.

Figure 5A represents different curves 40 of referenced ratio ($\{R_{KB}\}_\beta$) values depending on the roll-off factor $\beta$ when raised cosine filtering is used. Figure 5B represents different curves 50 of referenced ratio ($\{R_{KB}\}_\beta$) values depending

on the roll-off factor β when root raised cosine filtering is used.

The Knowledge Base KB of figure 5A and 5B can stored values which are represented by two functions : Im $(R_{KB})$ (β) and Re $(R_{KB})$ (β) which are functions of the variable β. The first function Im $(R_{KB})$ (β) represents the imaginary part of $R_{KB}$. The second function Re $(R_{KB})$ (β) represents the real part of $R_{KB}$.

The graphs of figures 5A and 5B represent the functions Re($R_{KB-A}$), Re($R_{KB-B}$), Re($R_{KB}$), Im($R_{KB-A}$), Im($R_{KB-B}$), Im($R_{KB}$) which are drawn for different sampling periods $T_E$, $T_{EA}$, $T_{EB}$.

The curve which represents real part and imaginary part of $R_{KB-A}$ corresponds to the sampling period $T_{EA}$.

The curve which represents real part and imaginary part of $R_{KB-B}$ corresponds to the sampling period $T_{EB}$,

The curve which represents real part and imaginary part of $R_{KB}$ corresponds to the sampling period $T_E$,

The graphs allow understanding that all curves are substantially the same for different sampling period used.

One advantage of the method of the invention is to define a ratio which is independent from the sampling period.

The method uses a knowledge base representing the ratio $R_{KB}$ as a function of β and compares the knowledge base with the estimated value of the ratio $R_E$. Finally, the method is able to discriminate a roll-off factor β of a filtered received signal.

The knowledge base KB stored in the memory can be used each time such that a comparing step of the method should be achieved. The calculation is simple and does not require specific complex algorithm that needs a high computing power. A specific value of β gives a unique pair of real and imaginary parts of the ratio $R_{KB}$.

Each chart represents a continuous function. Some portions of Re($R_{KB}$) is a monotone function of β, and Im $(R_{KB})$ is completely a monotone function for all intervals. These characteristics allow deducing by a simple way a unique ratio $(R_{KB})_{\beta min}$ corresponding to the estimated ratio $R_E$ for a specific value of the roll-off factor $\beta_{min}$. $\beta_{min}$ is obtained such that the difference between $R_E$ and $R_{KB}$ is minimized.

Moreover, the method of the invention allows determining the receiving filter applied in the communication channel using the graphs defined in figures 5A and 5B. For instance, if an estimated value of the ratio calculated by the method of the invention correspond to a unique value of Re $(R_{KB})$ and Im $(R_{KB})$ from the graph 5A, the method of the invention allows deducing that the filter used in emission by a primary user is a raised cosine filter.

In another hand, if an estimated value of the ratio calculated by the method of the invention correspond to a unique value of Re($R_{KB}$) and Im($R_{KB}$) from the graph 5B, the method of the invention allows deducing that the filter used in emission by a primary user is a root raised cosine filter.

The method allows determining a value of the roll-off factor β that minimizes a function defined as the mean square difference between a set of predefined ratio values $(R_{KB})_\beta$ from knowledge base KB and an estimated ratio noted $R_E$ as defined above.

In other embodiments of the invention, alternatives solutions using different functions as described below can be applied for determining the roll-off factor β of the shaping filter.

In a first embodiment, a first function $F_1$ minimizes the mean square difference of the ratio R. This function can be written as:

$$F_1 = \min_{\beta}\left[(R_E - R_{KB})^2\right]$$

In a second embodiment, a first function $F_2$ minimizes the mean square difference of imaginary parts. This function can be written as:

$$F_2 = \min_{\beta}\left[(\mathrm{Im}(\breve{R}_E) - \mathrm{Im}(R_{KB}))^2\right]$$

In a third embodiment, a second function $F_3$ minimizes the mean square difference of real parts. This function can be written as:

$$F_3 = \min_{\beta}\left[(\mathrm{Re}(\dot{R}_E) - \mathrm{Re}(R_{KB}))^2\right]$$

In a fourth embodiment, a third function $F_4$ minimizes the mean square difference of both imaginary and real parts. This function can be written as:

$$F_4 = \min_{\beta}\left[(\mathrm{Re}(R_E) - \mathrm{Re}(R_{KB}))^2 + (\mathrm{Im}(R_E) - \mathrm{Im}(R_{KB}))^2\right]$$

The method could also combine the three previous embodiments in order to determinate an average roll-off factor noted $\beta_a$.

Finally, the method of the invention permits to deduce in a final step the bandwidth of the channel communication signal by the modeling function of the bandwidth: BW = (1+ β) / Ts.

Some advantages of the invention results from the possible implementations described as above where a detection device might optimize its resources by increasing the resolution of the primary system's detection by estimating the bandwidth.

The detection device can be integrated and deployed in any wireless equipment used for any applications as telecommunication, radio diffusion/reception module or local wireless network access.

One advantage results from the fact that a best estimate of the frequency bandwidth ensures a best white space identification.

Another advantage of the invention is that once the roll-off factor β is being estimated, the detection can further use a proper matched filter. An equipment can be aware of his electromagnetic environment and reduce generation of noise and interference signals at the antenna.

Finally, another benefit of the present invention is that a detection device can be associated to other devices that need to know the appropriated bandwidth of the channel communication in order to perform matched filtering.

The invention should not restrict only to QPSK signals, it might be used for any digital modulation using Nyquist filtering.

For digital transmission systems, the frequency occupancy might be under optimized and a device of the invention with incorporated detection function might benefit from detecting some gaps, i.e. small white spaces, in the frequency band. In such a scenario, the device of the invention might optimize its transmission resources by increasing the resolution of the primary system's detection, i.e. by correctly identifying the bandwidth used by the primary system. For instance, a secondary user with detection functionalities can benefit of this bandwidth estimation by better detecting white spaces (i.e., unused frequency bands) and therefore by increasing transmission opportunities.

The invention also concerns an adaptive matched filter, a cognitive radio, a smartphone or a cell phone which comprise a detection device of the invention.

## Claims

1. A method for estimating a bandwidth (BW) for a given digital signal (x(n)), the digital signal being a sampled signal from a given signal (x(t)) being filtered by a filter having a roll-off factor (β), the digital signal having a known symbol period (Ts), the method comprising:

    • determining an order (p) of the cyclic autocorrelation function (CAF) of the digital signal (s(n)), the cyclic autocorrelation function (CAF) being a function of a delay (d) and a cyclic frequency (α), noted CAF(α, d);
    • defining a first predefined value of the cyclic frequency (α1) and second predefined values of the delay (d1),
    • estimating at least one first value of a main function depending of the p order of the cyclic autocorrelation function for the first and the second predefined values using a calculator ;
    • comparing the estimated first value of the main function with at least one set of predefined values ($\{V_i\}_\beta$) from a knowledge base (KB) stored in a memory, each predefined value of the set of predefined values ($\{V_i\}_\beta$) being associated to a unique roll-off factor (β).
    • estimating a bandwidth (BW) using a modelling function of the bandwidth depending on the roll-off factor (β) and the symbol period (Ts) of the received signal.

2. A method for estimating a bandwidth (BW) according to claim 1, wherein the main function is the p order of the cyclic autocorrelation function (CAFp (α1, d1) ) for the first predefined value (α1) and the second predefined value (d1) and the predefined values of the knowledge base (KB) are predefined CAF values ($\{CAF_{KB}\}_{\beta,Te}$) , each CAF ($CAF_{KB}$) of the set of predefined CAF ($\{CAF_{KB}\}_{\beta,Te}$) being associated to a unique sampling period (Te) .

3. A method for estimating a bandwidth (BW) according to claim 1, the method comprising :

    • defining a third predefined value of the cyclic frequency (α2) and forth predefined values of the delay (d2) , wherein the main function is the an estimating ratio ($R_E$) between:

• p order of cyclic autocorrelation function (CAFp($\alpha$1, d1)) for the first predefined value ($\alpha$1) and the second predefined value (d1) and;
• p order of cyclic autocorrelation function (CAFp($\alpha$2, d2)) for the third predefined value ($\alpha$2) and the forth predefined value (d2).
and the predefined values of the knowledge base (KB) are predefined ratio ($\{R_{KB}\}_\beta$) from a knowledge base (KB).

**4.** A method for estimating a bandwidth (BW) according to claim 3, wherein the first predefined value ($\alpha$1) and the third predefined value ($\alpha$2) are the same value.

**5.** A method for estimating a bandwidth (BW) according to any claim from 1 to 4, wherein the method comprises estimating a symbol period Ts in order to define a known symbol period.

**6.** A method for estimating a bandwidth (BW) according to any claim from 1 to 4, wherein the method comprises extracting a symbol period Ts from a database in order to define a known symbol period.

**7.** A method for estimating a bandwidth (BW) according to any claim from 1 to 6, wherein an even order CAF is used.

**8.** A method for estimating a bandwidth (BW) according to any claim from 1 to 6, wherein a forth order CAF is used.

**9.** A method for estimating a bandwidth (BW) according to any claim from 1 to 6, wherein a second order CAF is used.

**10.** A method for estimating a bandwidth (BW) according to any claim from 1 to 9, wherein the absolute value of the first predefined value ($\alpha$1) and/or the third predefined values ($\alpha$2) of the cyclic frequency is equal to the inverse of the symbol period (1/Ts).

**11.** A method for estimating a bandwidth (BW) according to any claim from 1 to 9, wherein the value of the second predefined value (d1) of the delay is equal to zero.

**12.** A method for estimating a bandwidth (BW) according to any claim from 1 to 9, wherein the absolute value of the third predefined value (d2) of the delay is equal to the symbol period (Ts).

**13.** A method for estimating a bandwidth (BW) according to any claim from 1 to 12, wherein the method comprises finding a variable that is minimizing a first function ($F_1$) defined by the mean square difference between the main function ($R_E$) and each value of the set of predefined values from the knowledge base ($\{R_{KB}\}_\beta$).

**14.** A method for estimating a bandwidth (BW) according to any claim from 1 to 12, wherein the method comprises finding a variable that is minimizing a second function ($F_2$) defined by the mean square difference between:

• imaginary part of the main function (Im($R_E$));
• imaginary part the set of predefined values of a knowledge base (Im $\{R_{KB}\}_\beta$) .

**15.** A method for estimating a bandwidth (BW) according to any claim from 1 to 12, wherein the method comprises finding a variable that is minimizing a third function ($F_3$) defined the mean square difference between:

• real part of the main function (Re($R_E$));
• real part the set of predefined values of a knowledge base (Re $\{R_{KB}\}_\beta$) .

**16.** A method for estimating a bandwidth (BW) according to any claim from 1 to 12, wherein the method comprises finding a variable that is  minimizing a forth function ($F_4$) defined by the sum of the second and the third functions.

**17.** A method for estimating a bandwidth (BW) according to any claim from 1 to 12, wherein the method comprises finding a variable that is minimizing a combination of functions defined according to any claims from 13 to 16.

**18.** A method for estimating a bandwidth (BW) according to any claim from 1 to 17, wherein the method comprises calculating the roll-off factor by comparing the main function ($R_E$) with the set of predefined values ($\{R_{KB}\}_\beta$), the bandwidth being deduced by the modelling function defined by the relationship: BW = (1 + $\beta$) / Ts.

**19.** A method for estimating a bandwidth (BW) according to any claim from 1 to 18, wherein the method furthermore comprises generating a second signal in emission, so that the transmitted signal bandwidth is not overlapping with the estimated frequency bandwidth.

20. A method for estimating a bandwidth (BW) according to any claim from 1 to 19, wherein the method furthermore comprises configuring a second frequency bandwidth of a second filter in order to generate a second signal in emission, the second signal being filtered by the second filter, the second frequency bandwidth being matched so that is not overlapping the estimated frequency bandwidth.

21. Detection device for estimating a bandwidth comprising a receiving module and an antenna configured for receiving and sampling wireless signals, the detection device having furthermore a calculator operating on sampled signal, the detection device allowing the achievement of steps of method according claim 1 to claim 20, the detection device generating a value corresponding to the bandwidth channel frequency of the received signal.

22. Adaptive and/or reconfigurable filter comprising a detection device according to claim 21, having an agile digital filter configured for matching its shaping function with the estimated shaping function.

23. Radio system comprising a receiving module having a adaptive and/or reconfigurable filter according to claim 22.

Te

NY

1

FIG.1

FIG.2A

FIG.2B

SQ (NY)

Te

3

30

FIG.2C

FIG.3A

FIG.3B

FIG.4A

FIG.4B

FIG.5A

FIG.5B

FIG.6A

FIG.6B

Europäisches
Patentamt

European
Patent Office

Office européen
des brevets

**EUROPEAN SEARCH REPORT**

Application Number

EP 12 15 9978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/059613 A1 (UTTER ALEXANDER C [US] ET AL) 8 March 2012 (2012-03-08) <br> * abstract * <br> * paragraphs [0005] - [0007], [0010], [0023] - [0026], [0039], [0049], [0051], [0055] * <br> * figure 1 * | 1-23 | INV. <br> H04L27/00 |
| A | US 2011/249776 A1 (ZENG YONGHONG [SG] ET AL) 13 October 2011 (2011-10-13) <br> * abstract * <br> * paragraphs [0003], [0004], [0054] - [0071], [0082], [0097], [0121], [0124] * | 1-23 | |
| A | SHELLHAMMER S J: "Spectrum sensing in IEEE802.22", <br> INTERNET CITATION, <br> 9 June 2008 (2008-06-09), pages 1-6, <br> XP002557132, <br> Retrieved from the Internet: <br> URL:http://www.eurasip.org/Proceedings/Ext /CIP2008/papers/1569094657.pdf <br> [retrieved on 2009-11-23] <br> * the whole document * | 1-23 | TECHNICAL FIELDS SEARCHED (IPC) <br><br> H04L |
| A | CABRIC D ET AL: "Implementation issues in spectrum sensing for cognitive radios", SIGNALS, SYSTEMS AND COMPUTERS, 2004. CONFERENCE RECORD OF THE THIRTY- EIGHTH ASILOMAR CONFERENCE ON PACIFIC GROVE, CA, USA NOV. 7-10, 2004, PISCATAWAY, NJ, USA,IEEE, <br> vol. 1, 7 November 2004 (2004-11-07), pages 772-776, XP010781056, <br> DOI: 10.1109/ACSSC.2004.1399240 <br> ISBN: 978-0-7803-8622-8 <br> * the whole document * | 1-23 | |

-/--

The present search report has been drawn up for all claims

| Place of search | Date of completion of the search | Examiner |
|---|---|---|
| Munich | 5 July 2012 | Murcia Martinez, J |

EPO FORM 1503 03.82 (P04C01)

Europäisches Patentamt

European Patent Office

Office européen des brevets

## EUROPEAN SEARCH REPORT

Application Number

EP 12 15 9978

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OZGUL B ET AL: "Bandwidth-adaptive MIMO OFDM for dynamic spectrum access networks", PHYSICAL COMMUNICATION, ELSEVIER, AMSTERDAM, NL, vol. 2, no. 3, 1 September 2009 (2009-09-01), pages 194-203, XP026677838, ISSN: 1874-4907, DOI: 10.1016/J.PHYCOM.2009.01.002 [retrieved on 2009-01-19] * the whole document * ----- | 1-23 | |

TECHNICAL FIELDS
SEARCHED        (IPC)

The present search report has been drawn up for all claims

| Place of search | Date of completion of the search | Examiner |
|---|---|---|
| Munich | 5 July 2012 | Murcia Martinez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ........................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 15 9978

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2012

| Patent document cited in search report | | Publication date | Patent family member(s) | | Publication date |
|---|---|---|---|---|---|
| US 2012059613 | A1 | 08-03-2012 | NONE | | |
| US 2011249776 | A1 | 13-10-2011 | US 2011249776 A1 | | 13-10-2011 |
| | | | WO 2008140417 A1 | | 20-11-2008 |

EPO FORM P0459

For more details about this annex : see Official Journal of the European Patent Office, No. 12/82